(19) **Europäisches Patentamt European Patent Office Office européen des brevets**

(11) **EP 4 576 685 A1**

(12) **EUROPEAN PATENT APPLICATION**

(43) Date of publication:
**25.06.2025  Bulletin 2025/26**

(21) Application number: **24220327.1**

(22) Date of filing: **16.12.2024**

(51) International Patent Classification (IPC):
**H04L 25/02** (2006.01)    **H04L 27/26** (2006.01)
**H04B 17/364** (2015.01)

(52) Cooperative Patent Classification (CPC):
**H04B 17/364; H04L 25/0224; H04L 25/0256;
H04L 27/2675**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.12.2023  KR 20230185155
07.05.2024  KR 20240059881**

(71) Applicant: **Samsung Electronics Co., Ltd.
Suwon-si, Gyeonggi-do 16677 (KR)**

(72) Inventors:
• **YANG, Hyekyeong
16677 Suwon-si (KR)**
• **YOON, Hongsik
16677 Suwon-si (KR)**
• **LEE, Sunyoung
16677 Suwon-si (KR)**

(74) Representative: **Marks & Clerk LLP
15 Fetter Lane
London EC4A 1BW (GB)**

(54) **ELECTRONIC DEVICE FOR CALCULATING EFFECTIVE POWER DELAY PROFILE IN HST-SFN SCENARIO**

(57)     An electronic device in a high speed train-single frequency network (HST-SFN) scenario includes processing circuitry configured to receive a first downlink signal from a serving base station (BS) and a second downlink signal from a neighboring BS, the second downlink signal being the same as the first downlink signal, and the first and second downlink signal being transmitted in an SFN scheme, receive a first synchronization signal (SS) from the serving BS and a second SS from the neighboring BS, the second SS being different from the first SS, and the first SS and the second SS being transmitted in a non-SFN scheme, obtain a first power delay profile (PDP) based on the first SS, obtain a second PDP based on the second SS, calculate an effective PDP based on the first PDP and the second PDP, and generate a weight matrix (WM) based on the effective PDP.

FIG. 1

**Description**

BACKGROUND

The inventive concepts relate to an electronic device, and more particularly, to an electronic device for calculating a high speed train single frequency network (HST-SFN) scenario, an operating method thereof, and a wireless communication system.

In new radio (NR) release 17, an HST-SFN scenario was proposed in a multi-transmission/reception point (mTRP) environment. The HST-SFN scenario is intended to provide the optimal Quality of Service (QoS) (or a higher QoS) to a user terminal on an object moving at high speed (e.g., a high-speed train, etc.).

Unlike a physical downlink control channel (PDCCH)/physical downlink shared channel (PDSCH) transmitted in an mTRP environment by using an SFN method, signals for synchronization such as a synchronization signal block (SSB) and a tracking reference signal (TRS) may not be transmitted in an SFN scheme. In this regard, a weight matrix used for channel estimation needs to be (or should be) calculated based on a power delay profile (PDP) experienced by the channel transmitted in the SFN scheme, in order to prevent the channel estimation performance from deteriorating (or reduce such deterioration). However, PDPs calculated from the SSB and the TRS that are not transmitted by using the SFN scheme do not match the channel transmitted in the SFN scheme.

SUMMARY

The inventive concepts provide an electronic device that performs improved channel estimation by calculating an effective power delay profile (PDP) based on PDPs of a serving base station and a neighboring base station in a high speed train single frequency network (HST-SFN) scenario and generating a weight matrix based on the calculated effective PDP, an operating method thereof, and a wireless communication system.

According to an aspect of the inventive concepts, there is provided an electronic device in a high speed train-single frequency network (HST-SFN) scenario, the electronic device including processing circuitry configured to receive a first downlink signal from a serving base station and a second downlink signal from a neighboring base station, the second downlink signal being the same as the first downlink signal, and the first downlink signal and the second downlink signal being transmitted in an SFN scheme, receive a first synchronization signal from the serving base station and a second synchronization signal from the neighboring base station, the second synchronization signal being different from the first synchronization signal, and the first synchronization signal and the second synchronization signal being transmitted in a non-SFN scheme, obtain a first power delay profile (PDP) based on the first synchronization signal, obtain a second PDP based on the second synchronization signal, calculate an effective PDP based on the first PDP and the second PDP, and generate a weight matrix (WM) based on the effective PDP.

According to an aspect of the inventive concepts, there is provided an electronic device in an HST-SFN scenario, the electronic device including processing circuitry configured to receive a first downlink signal from a serving base station and a second downlink signal from a neighboring base station, the second downlink signal being the same as the first downlink signal, and the first downlink signal and the second downlink signal being transmitted in an SFN scheme, receive a first synchronization signal from the serving base station and a second synchronization signal from the neighboring base station, the second synchronization signal being different from the first synchronization signal, the first synchronization signal and the second synchronization signal being transmitted in a non-SFN scheme, the first synchronization signal including first power scaling information indicating a transmission power of the serving base station, and the second synchronization signal including second power scaling information indicating a transmission power of the neighboring base station, obtain a first power delay profile (PDP) based on the first synchronization signal, obtain a second PDP based on the second synchronization signal, calculate an effective PDP based on the first power scaling information, the first PDP, the second power scaling information, and the second PDP, and generate a weight matrix (WM) based on the effective PDP.

According to an aspect of the inventive concepts, there is provided a wireless communication system in an HST-SFN scenario, the wireless communication system including a serving base station configured to transmit a first downlink signal and a first synchronization signal, a neighboring base station configured to transmit a second downlink signal and a second synchronization signal, the second downlink signal being the same as the first downlink signal, the second synchronization signal being different from the first synchronization signal, the first downlink signal and the second downlink signal being transmitted in an SFN scheme, and the first synchronization signal and the second synchronization signal transmitted in a non-SFN scheme, and an electronic device configured to obtain a first power delay profile (PDP) based on the first synchronization signal, obtain a second PDP based on the second synchronization signal, calculate an effective PDP based on the first PDP and the second PDP, and generate a weight matrix (WM) based on the effective PDP.

At least some of the above and other features of the invention are set out in the claims.

BRIEF DESCRIPTION OF THE DRAWINGS

Embodiments will be more clearly understood from the following detailed description taken in conjunction with the accompanying drawings in which:

FIG. 1 illustrates an example of a wireless communication system in a high speed train single frequency network (HST-SFN) scenario according to embodiments;
FIG. 2 is a block diagram of a base station according to embodiments;
FIG. 3 is a block diagram of an electronic device according to embodiments;
FIG. 4 is a flowchart illustrating an operating method of an electronic device according to embodiments;
FIG. 5 is a flowchart illustrating a detailed operation method of calculating an effective power delay profile (PDP) according to embodiments;
FIG. 6 is a flowchart illustrating an operating method of an electronic device according to embodiments;
FIG. 7 is a flowchart illustrating an operating method of a base station according to embodiments; and
FIG. 8 is a block diagram of a wireless communication device according to embodiments.

DETAILED DESCRIPTION

Hereinafter, embodiments of the inventive concepts will be described in detail with reference to the attached drawings.

The advantages and features of the inventive concepts and methods for achieving the same will become clear with reference to embodiments described in detail below along with the accompanying drawings. However, the inventive concepts are not limited to the examples shown below, but may be implemented in various different forms and used interchangeably, and the present examples ensure that the description of the inventive concepts is complete. In addition, it is provided to fully inform one of ordinary skilled in the art of the inventive concepts of the scope of the disclosure, and the scope of rights of the inventive concepts is only defined by the scope of the claims. Also, specific configurations described only in each example of the inventive concepts may be used in other examples. Like reference numerals refer to like elements throughout the specification.

The terminology used herein is for describing embodiments and is not intended to limit the scope of the inventive concepts. As used herein, singular forms also include plural forms, unless specifically stated otherwise in the context. As used herein, "comprises" and/or "comprising" specify the presence of stated components, operations, and/or elements, but do not preclude the presence or addition of one or more other components, operations, and/or elements.

Unless otherwise defined, all terms (including technical and scientific terms) used herein may be used with meanings that may be commonly understood by one of ordinary skilled in the art to which the inventive concepts belong. Also, terms defined in commonly used dictionaries are not interpreted ideally or overly unless clearly specifically defined.

In addition, in specifically describing embodiments of the inventive concepts, a main target will be a new radio (NR)-based wireless communication system, but the main gist of the inventive concepts may be applied to other communication systems (e.g., a cellular communication system such as Long Term Evolution (LTE), LTE-Advanced (LTE-A), Wireless Broadband (WiBro), Global System for Mobile communication (GSM), or a short-range communication system such as Bluetooth and Near Field Communication (NFC)) having similar technical background and channel types with slight modifications without significantly departing from the scope of the inventive concepts, which may be possible at the discretion of one or ordinary skill in the art of the inventive concepts.

A hardware approach method in various examples of the inventive concepts described below will be described. However, because various examples of the inventive concepts include technology using both hardware and software, the various examples of the inventive concepts do not exclude a combined software and hardware-based approach method.

In addition, the terms used in the description given below are illustrative for convenience of explanation. Accordingly, the inventive concepts are not limited to the terms described below, and other terms having equivalent technical meaning may be used.

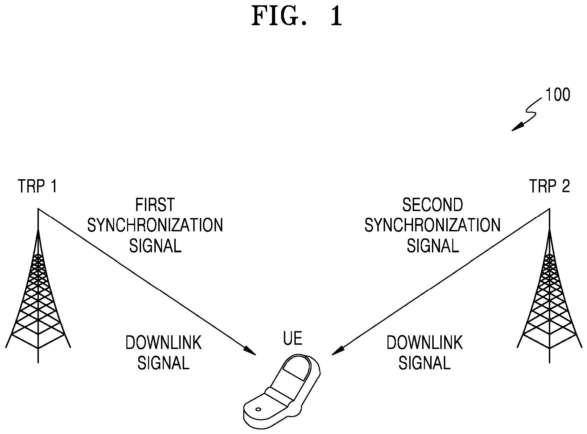

FIG. 1 illustrates an example of a wireless communication system 100 in a high speed train single frequency network (HST-SFN) scenario according to embodiments.

Referring to FIG. 1, the wireless communication system 100 may include a serving base station transmission/-reception point TRP 1, a neighboring base station TRP 2, and/or an electronic device UE. The serving base station TRP 1, the neighboring base station TRP 2, and the electronic device UE may be nodes that use a wireless channel in the wireless communication system 100.

According to embodiments, the serving base station TRP 1 and the neighboring base station TRP 2 are network infrastructure components that provide wireless access to the electronic device UE. The serving base station TRP 1 and/or the neighboring base station TRP 2 may each have coverage defined as a certain geographic area based on a distance over which a signal may be transmitted. The serving base station TRP 1 and/or the neighboring base station TRP 2 may refer to a base station, a transmit point (TP), an enhanced base station (eNodeB) or (eNB), a 5g/NR base station (gNB), a microcell, a femtocell, a Wi-Fi access point (AP), or any component configured to provide wireless access to a network, such as wirelessly enabled devices, in addition to a transmit-receive point (TPR). For example, the serving base station TRP 1 and/or the neighboring base station TRP 2 may provide wireless access according to one or more wireless communication protocols, such as 5G/NR 3GPP NR interface/access, LTE, LTE-A, high speed packet access (HSPA), WiFi 802.1 1a/b/g/n/ac, etc. For convenience, "TRP" is used herein to refer to network infrastructure components that provide wireless access to remote terminals.

According to embodiments, the serving base station TRP 1 and/or the neighboring base station TRP 2 may be connected to one or more 'multi-TRPs', or mTRPs. The serving base station TRP 1 and/or the neighboring base station TRP 2 may transmit a downlink signal to the electronic device UE or receive an uplink signal from the electronic device UE through the mTRPs in the HST-SFN scenario. The HST-SFN scenario may be joint transmission in which an mTRP transmits the same downlink signal (or similar downlink signals) to the electronic device UE when the electronic device UE moves at higher speed. The downlink signal may include at least a physical downlink shared channel (PDSCH) and a physical downlink control channel (PDCCH). For example, the serving base station TRP 1 and the neighboring base station TRP 2 may transmit the same downlink signal (or similar downlink signals) to the electronic device UE. That is, the downlink signal transmitted from the serving base station TRP 1 to the electronic device UE and the downlink signal transmitted from the neighboring base station TRP 2 to the electronic device UE may be transmitted in the SFN scheme. According to embodiments, the HST-SFN scenario may include the electronic device UE physically moving (e.g., being moved) at a speed greater than or equal to a speed threshold. According to embodiments, the speed threshold may be a design parameter determined through empirical study, but embodiments are not limited thereto, and the speed threshold may be defined through corresponding (e.g., 3GPP) specifications, input by a user of the electronic device UE, etc.

According to embodiments, the electronic device UE is a device used by a user and may communicate with a base station 110 through a wireless channel. The electronic device UE may be referred to as any component such as "user equipment (UE)", a "mobile station", a "subscriber station", "customer premises equipment (CPE)", a "remote terminal", a "wireless terminal", and a "reception point," etc. For convenience, regardless of whether the electronic device UE is generally considered a mobile device (such as a mobile phone or smartphone as a non-limiting example) or a fixed device (such as a desktop computer or vending machine as a non-limiting example), the electronic device UE may be used to refer to a remote wireless device wirelessly accessing the serving base station TRP 1 and/or the neighboring base station TRP 2.

According to embodiments, the serving base station TRP 1 and the neighboring base station TRP 2 may transmit different synchronization signals. For example, the serving base station TRP 1 may transmit a first synchronization signal to the electronic device UE, and the neighboring base station TRP 2 may transmit a second synchronization signal different from the first synchronization signal to the electronic device UE. The first synchronization signal and the second synchronization signal may include (e.g., may each include) at least a tracking reference signal (TRS) and/or a synchronization signal block (SSB). That is, the respective synchronization signals transmitted from the serving base station TRP 1 and the neighboring base station TRP 2 to the electronic device UE may be transmitted in a non-SFN scheme. In this regard, based on the fact that the serving base station TRP 1 and the neighboring base station TRP 2 use independent local oscillators and are different in the mobility of the electronic device UE, a frequency offset difference may occur in the electronic device UE. That is, the electronic device UE moving away from the serving base station TRP 1 and toward the neighboring base station TRP 2 may experience a negative Doppler offset moving away from the serving base station TRP 1 and a positive Doppler offset moving toward the neighboring base station TRP 2. When the electronic device UE generates a weight matrix (WM) by using a power delay profile (PDP) obtained according to a synchronization signal of high received power, and performs channel estimation based on the generated WM, channel estimation performance may deteriorate.

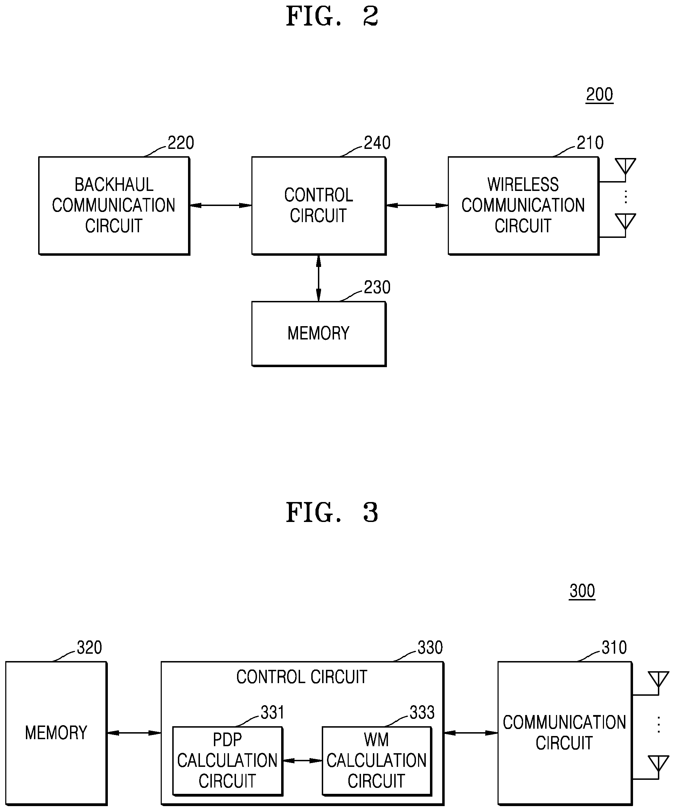

FIG. 2 is a block diagram of a base station 200 according to embodiments.

Referring to FIG. 2, the base station 200 may include a wireless communication circuit 210, a backhaul communication circuit 220, a memory 230, and/or a control circuit 240. The base station 200 in FIG. 2 may correspond to the serving base station TRP 1 or the neighboring base station TRP 2 (or each of the serving base station TRP 1 and the neighboring base station TRP 2) of FIG. 1.

According to embodiments, the wireless communication circuit 210 may perform functions for transmitting and receiving signals through a wireless channel. According to embodiments, the wireless communication circuit 210 may perform a conversion function between a baseband signal and bit strings according to the physical layer standard of a system. For example, when transmitting data, the wireless communication circuit 210 may generate complex symbols by encoding and modulating a transmission bit string, and when receiving data, the wireless communication circuit 210 may restore a reception bit string by demodulating and decoding the baseband signal. In addition, the wireless communication circuit 210 may up-convert the baseband signal into a radio frequency (RF) band signal and transmit the RF band signal through an antenna, or may down-convert the RF band signal received through the antenna into the baseband signal. To this end, the wireless communication circuit 210 may include a transmission filter, a reception filter, an amplifier, a mixer, an oscillator, a digital to analog converter (DAC), an analog to digital converter (ADC), etc.

The wireless communication circuit 210 may transmit or receive signals. For example, the wireless communication circuit 210 may transmit a synchronization signal, a reference signal, system information, a message, control information, data, etc. In addition, the wireless communication circuit 210 may perform beamforming. The wireless communication circuit 210 may apply a beamforming weight to a signal to be transmitted and/or received, to provide directionality to the signal. The wireless communication circuit 210 may change a formed beam and transmit signals repeatedly.

According to embodiments, the backhaul communication circuit 220 may provide an interface for communicating with other nodes in a network. That is, the backhaul communication circuit 220 may convert a bit string transmitted from the base station 110 to another node, for example, another access node, another base station, a higher node, a core network, etc., into a physical signal and convert the physical signal received from another node (e.g., another base station, TRP, etc.) into a bit string.

According to embodiments, the memory 230 may store data such as basic programs, application programs, and/or setting information for operation of the base station 110. The memory 230 may include volatile memory, non-volatile memory, or a combination of volatile memory and non-volatile memory.

The control circuit 240 may control operations of the base station 110. For example, the control circuit 240 may transmit and receive signals through the wireless communication circuit 210 or the backhaul communication circuit 220. In addition, the control circuit 240 may write and read data to and from the memory 230. To this end, the control circuit 240 may include at least one processor. For example, the control circuit 240 may include at least one of a central processing unit (CPU), a neural processing unit (NPU), and/or a graphics processing unit (GPU).

According to embodiments, the control circuit 240 may determine transmission in an SFN scheme. For example, the control circuit 240 may receive UE capability information through the wireless communication circuit 210. The UE capability information may include information indicating whether the electronic device UE supports transmission in the SFN scheme. The control circuit 240 may transmit the downlink signal in the SFN scheme in response to identifying that the electronic device UE supports transmission in the SFN scheme.

According to embodiments, the control circuit 240 may transmit power scaling information to the electronic device UE. The power scaling information may correspond to information indicating the transmission power of a synchronization signal transmitted in a non-SFN scheme. The power scaling information may indicate one of power ranges in which a synchronization signal may be transmitted. For example, the synchronization signal may be transmitted with power corresponding to any one of first to eighth ranges. The power scaling information may include 3 bits to indicate any one of the first to eighth ranges. For example, the first range may be indicated through 3 bits of "000". When the power scaling information is "000", a power level at which the synchronization signal is transmitted may be greater than or equal to a first value P0 and less than a second value P1. The second range may be indicated through 3 bits of "001". When the power scaling information is "001", a power level at which the synchronization signal is transmitted may be greater than or equal to the second value P1 and less than a third value P2. The third range may be indicated through 3 bits of "010". When the power scaling information is "010", a power level at which the synchronization signal is transmitted may be greater than or equal to the third value P2 and less than a fourth value P3. The fourth range may be indicated through 3 bits of "011". When the power scaling information is "011", a power level at which the synchronization signal is transmitted may be greater than or equal to the fourth value P3 and less than a fifth value P4. The fifth range may be indicated through 3 bits of "100". When the power scaling information is "100", a power level at which the synchronization signal is transmitted may be greater than or equal to the fifth value P4 and less than a sixth value P5. The sixth range may be indicated through 3 bits of "101". When the power scaling information is "101", a power level at which the synchronization signal is transmitted may be greater than or equal to the sixth value P5 and less than a seventh value P6. The seventh range may be indicated through 3 bits of "110". When the power scaling information is "110", a power level at which the synchronization signal is transmitted may be greater than or equal to the seventh value P6 and less than an eighth value P7. The eighth range may be indicated through 3 bits of "111". When the power scaling information is "111", a power level at which the synchronization signal is transmitted may be greater than or equal to the eighth value P7.

FIG. 3 is a block diagram of an electronic device 300 according to embodiments.

Referring to FIG. 3, the electronic device 300 may include a communication circuit 310, a memory 320, and/or a control circuit 330. The electronic device 300 may correspond to the electronic device UE of FIG. 1.

According to embodiments, the communication circuit 310 may perform functions for transmitting and receiving signals through a wireless channel. For example, the communication circuit 310 may perform a conversion function between a baseband signal and bit strings according to the physical layer standard of a system. For example, when transmitting data, the communication circuit 310 may generate complex symbols by encoding and modulating a transmission bit string, and when receiving data, the communication circuit 310 may restore a reception bit string by demodulating and decoding the baseband signal. In addition, the communication circuit 310 may up-convert the baseband signal into an RF band signal and transmit the RF band signal through an antenna, or may down-convert the RF band signal received through the antenna into the baseband signal. For example, the communication circuit 310 may include a transmission filter, a reception filter, an amplifier, a mixer, an oscillator, a DAC, an ADC, etc. The communication circuit 310 may perform beamforming. The communication circuit 310 may apply a beamforming weight to a signal to be transmitted and received, to provide directionality to the signal.

According to embodiments, the communication circuit 310 may transmit and receive signals. The communication circuit 310 may receive a downlink signal. The downlink signal may include a synchronization signal (SS), a reference signal (RS), system information, a configuration message, control information, downlink data, etc. Furthermore, the communication circuit 310 may transmit an uplink signal. The uplink signal may include a random access-related signal, a reference signal (e.g., a sounding reference signal (SRS), a demodulation (DM) RS, a phase tracking (PT) RS), uplink data including channel state information (CSI) feedback information, etc.

According to embodiments, the memory 320 may store data such as a basic program, an application program, and/or configuration information for the operation of the electronic device 300. The memory 320 may include volatile memory, non-volatile memory, or a combination of volatile memory and non-volatile memory.

The control circuit 330 may control overall operations of the electronic device 300. For example, the control circuit 330 may transmit and receive signals through the communication circuit 310. In addition, the control circuit 330 may write and read data to and from the memory 320. To this end, the control circuit 330 may include at least one processor or microprocessor, or may be a part of the processor. In the case of a part of the processor, a part of the communication circuit 310 and the control circuit 330 may be referred to as a communication processor (CP).

According to embodiments, the control circuit 330 may include a PDP calculation circuit 331 and/or a WM calculation circuit 333. The PDP calculation circuit 331 may calculate a PDP. For example, the PDP calculation circuit 331 may obtain a first PDP based on a first synchronization signal received from a serving base station (e.g., TRP 1 of FIG. 1) and obtain a second PDP based on a second synchronization signal received from a neighboring base station (e.g., TRP 2 of FIG. 1). The PDP calculation circuit 331 may obtain an effective PDP based on the first PDP and the second PDP. The effective PDP may be a PDP for generating an effective WM corresponding to a channel of a downlink signal transmitted in an SFN scheme. For example, the PDP calculation circuit 331 may obtain the effective PDP by summing the first PDP and the second PDP. In another example, the control circuit 330 may obtain the effective PDP based additionally on power scaling information of the first PDP and power scaling information of the second PDP. In this regard, the effective PDP may be obtained based on the corresponding power ratio considering the power scaling information of the first PDP and the power scaling information of the second PDP. A detailed description of the effective PDP will be given below.

The WM calculation circuit 333 may calculate a WM for channel estimation matching the channel of the downlink signal transmitted in the SFN scheme based on the effective PDP obtained from the PDP calculation circuit 331.

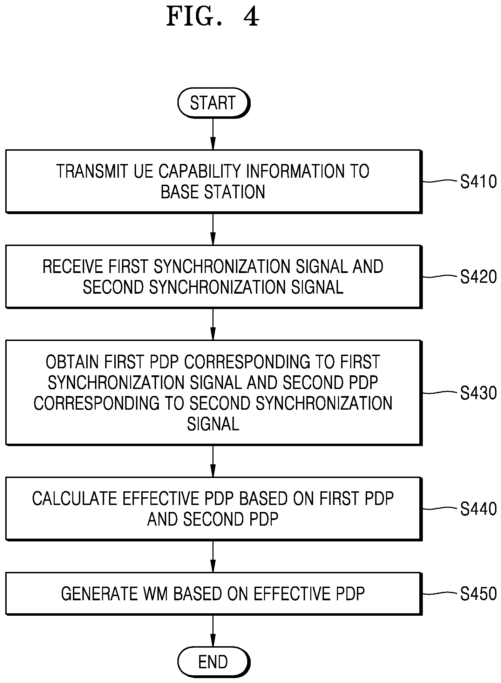

FIG. 4 is a flowchart illustrating an operating method of an electronic device according to embodiments. The electronic device of FIG. 4 may correspond to the electronic device UE of FIG. 1.

Referring to FIG. 4, in operation S410, the electronic device UE may transmit UE capability information to a base station. The UE capability information may include information indicating whether the electronic device UE supports transmission in an SFN scheme. For example, the UE capability information may indicate that the electronic device UE may support a multi-transmission configuration indicator (TCI) state. Referring to 3GPP TS 38.331, the UE capability information may include information indicated in the following table.

[Table 1]

```
sfn-SimulTwoTCI-AcrossMultiCC-r17        ENUMERATED {supported}
OPTIONAL,


FeatureSetDownlink-v1700 ::= SEQUENCE {
...
 ENUMERATED {supported}          OPTIONAL,
  -- R1 23-6-1-1    SFN scheme A (scheme 1) for PDCCH only
  sfn-SchemeA-PDCCH-only-r17       ENUMERATED {supported}         OPTIONAL,
  -- R1 23-6-1a Dynamic switching - scheme A
  sfn-SchemeA-DynamicSwitching-r17 ENUMERATED {supported}          OPTIONAL,
```

```
-- R1 23-6-1b SFN scheme A (scheme 1) for PDSCH only
sfn-SchemeA-PDSCH-only-r17        ENUMERATED {supported}            OPTIONAL,
-- R1 23-6-2   SFN scheme B (TRP based pre-compensation) for PDSCH and PDCCH
sfn-SchemeB-r17                   ENUMERATED {supported}            OPTIONAL,
-- R1 23-6-2a Dynamic switching - scheme B
sfn-SchemeB-DynamicSwitching-r17 ENUMERATED {supported}            OPTIONAL,
-- R1 23-6-2b SFN scheme B (TRP based pre-compensation) for PDSCH only
sfn-SchemeB-PDSCH-only-r17        ENUMERATED {supported}            OPTIONAL,
...
}                                                                  OPTIONAL
}
```

In operation S420, the electronic device UE may receive a first synchronization signal and a second synchronization signal. The first synchronization signal may correspond to a synchronization signal transmitted from a serving base station (e.g., TRP 1 of FIG. 1), and the second synchronization signal may correspond to a synchronization signal transmitted from a neighboring base station (e.g., TRP 2 of FIG. 1). In this regard, the first synchronization signal may be different from the second synchronization signal. In addition, the electronic device UE may receive the same downlink signal (or similar downlink signals) from the serving base station and the neighboring base station. That is, the downlink signal may be transmitted in the SFN scheme, and the synchronization signal may be transmitted in a non-SFN scheme. According to embodiments, references herein to transmitting in the "SFN scheme" may refer to the transmission of a common signal (e.g., the same signal or similar signals) by two or more base stations over a common channel (e.g., the same channel or similar channels). For example, the electronic device UE may receive the same downlink signal (or similar downlink signals) from both the serving base station and the neighboring base station over a common channel. According to embodiments, references herein to transmitting in the "non-SFN scheme" may refer to a transmission that is not in the SFN scheme. For example, transmitting in the non-SFN scheme may refer to the transmission of different signals by two or more base stations over different respective channels. According to embodiments, references herein to the "HST-SFN" scenario may refer to a scenario in which a downlink signal is being transmitted to a UE in the SFN scheme while the UE is physically moving (e.g., being moved, traveling, etc.) at a speed greater than or equal to the speed threshold.

In operation S430, the electronic device UE may obtain a first PDP corresponding to the first synchronization signal and a second PDP corresponding to the second synchronization signal. For example, the PDP calculation circuit 331 of the electronic device UE may obtain the first PDP based on an impulse response of the received first synchronization signal, and obtain the second PDP based on an impulse response of the received second synchronization signal.

In operation S440, the electronic device UE may calculate an effective PDP based on the first PDP and the second PDP. For example, the PDP calculation circuit 331 may calculate the first PDP corresponding to the first synchronization signal and the second PDP corresponding to the second synchronization signal, and combine the obtained first PDP and second PDP to calculate the effective PDP. The effective PDP may be a PDP corresponding to a channel of the downlink signal transmitted in the SFN scheme.

In operation S450, the electronic device UE may generate a WM based on the effective PDP. For example, the WM calculation circuit 333 may calculate a linear minimum mean square error (LMMSE) WM by obtaining a frequency correlation $r(k)$ based on the effective PDP obtained from the PDP calculation circuit 331, and calculating an auto-covariance matrix $R_{p,p}$ and a cross-covariance matrix $R_{h,p}$ based on the frequency correlation $r(k)$.

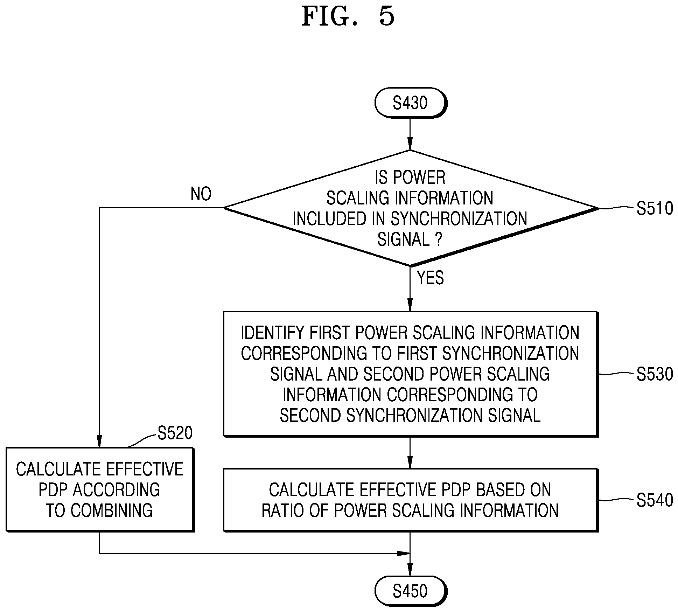

FIG. 5 is a flowchart illustrating a detailed operation method of calculating an effective PDP according to embodiments.

Referring to FIG. 5, in operation S510, the electronic device UE may determine whether power scaling information is included in a synchronization signal. For example, the serving base station TRP 1 and the neighboring base station TRP 2 may transmit the synchronization signal (e.g., the respective synchronization signals) including scaling information (e.g., each including scaling information) about transmission power transmitting the synchronization signal to the electronic device UE (e.g., a transmission power by which the respective synchronization signal was transmitted to the electronic device UE). For example, the serving base station TRP 1 and the neighboring base station TRP 2 may include the power scaling information in the synchronization signal as shown in the following table.

[Table 2]

| *NZP-CSI-RS-ResourceSet* information element |
|---|
| -- ASN1START<br>-- TAG-NZP-CSI-RS-RESOURCESET-START<br>NZP-CSI-RS-ResourceSet ::=        SEQUENCE {<br>  nzp-CSI-ResourceSetId              NZP-CSI-RS-ResourceSetId,<br>  nzp-CSI-RS-Resources              SEQUENCE (SIZE (1..maxNrofNZP-CSI-RS-<br>ResourcesPerSet)) OF NZP-CSI-RS-ResourceId,<br>  repetition                      ENUMERATED { on, off }<br>OPTIONAL,    -- Need S<br>  aperiodicTriggeringOffset        INTEGER(0..6)<br>OPTIONAL,    -- Need S<br>  trs-Info                      ENUMERATED {true}<br>OPTIONAL,    -- Need R<br>  trs-PowerScalingFactor          INTEGER(1..8)<br>OPTIONAL,    -- Need R |

*trs-PowerScalingFactor*

Indicates TRS power scaling factor from each TRP considering HST-SFN. The scaling factor usage is specified in TS 38.214 (see TS 38.214 [19], clause 5.2.2.3.1).

@38.214 Section 5.2.2.3.1
  - *trs-Info* in *NZP-CSI-RS-ResourceSet* is associated with a CSI-RS resource set and for which the UE can assume that the antenna port with the same port index of the configured NZP CSI-RS resources in the *NZP-CSI-RS-ResourceSet* is the same as described in Clause 5.1.6.1.1 and can be configured when reporting setting is not configured or when the higher layer parameter *reportQuantity* associated with all the reporting settings linked with the CSI-RS resource set is set to 'none'.
  - *trs-PowerScalingFactor* in *NZP-CSI-RS-ResourceSet* is associated with TRS power adjustment from different TRP considering SFN scenario. UE can adjust power level by multiplying the scaling factor divided by the sum of the scaling factors of each TRP.

Referring to Table 2, "trs-PowerScalingFactor" in bold type may correspond to the power scaling information. The power scaling information may be included in a non-zero power (NZP)-channel state information (CSI)-reference signal (RS)-ResourceSet information element (IE). The power scaling information may correspond to information for indicating transmission power of a synchronization signal transmitted in a non-SFN scheme. The power scaling information may indicate one of power ranges of synchronization signals previously promised (or set, established, configured, etc.) between the serving base station TRP 1 and the electronic device UE, and between the neighboring base station TRP 2 and the electronic device UE. For example, the power ranges of the previously promised synchronization signals may correspond to first to eighth ranges. The power scaling information may include 3 bits for indicating any one of the first to eighth ranges. For example, the first range may be indicated through 3 bits of "000". The second range may be indicated through 3 bits of "001". The eighth range may be indicated through 3 bits of "111 ".

In the above-described example, a range of power values at which synchronization signals may be transmitted is divided into the eight ranges, but the inventive concepts are not limited thereto. According to embodiments, the range of power values at which synchronization signals may be transmitted may be further finely divided. In this case, the power scaling information may include bits larger than 3 bits (e.g., 4 bits when divided into 16 ranges). According to embodiments, the range of power values at which synchronization signals may be transmitted may be further coarsely divided. In this case, the power scaling information may include fewer bits than 3 bits (e.g., 2 bits when divided into 4 ranges).

In operation S520, the electronic device UE may calculate an effective PDP according to combining. In operation S510, when it is identified that the power scaling information is not included in the synchronization signal, the electronic device UE may not calculate the effective PDP according to a ratio of the power scaling information, and thus may calculate the effective PDP according to the combining. The combining may simply refer to summing the first PDP and the second PDP. For example, the PDP calculation circuit 331 may calculate the effective PDP according to an equation below.

8

[Equation 1]

$$P_{SFN}[i] = P_{TCI0}[i] + P_{TCI1}[i]$$

Here, $P_{SFN}[i]$ indicates power of an *i* tap of a channel (e.g., a first channel) corresponding to a downlink signal transmitted in an SFN scheme, $P_{TGI0}[i]$ indicates power of an *i* tap of a channel (e.g., a second channel) corresponding to a first synchronization signal transmitted according to TCI0 (e.g., transmission configuration indication) in the serving base station TRP 1, and $P_{TCI1}[i]$ indicates power of an *i* tap of a channel (e.g., a third channel) corresponding to the second synchronization signal transmitted according to TCI1 in the neighboring base station TRP 2. That is, the PDP calculation circuit 331 may calculate the effective PDP by summing the power between synchronization signals transmitted in a non-SFN scheme according to Equation 1. According to embodiments, *i* may be an integer. According to embodiments, the second channel may be different from the first channel.

In operation S530, the electronic device UE may identify first power scaling information corresponding to the first synchronization signal and second power scaling information corresponding to the second synchronization signal. For example, the first power scaling information may be $\alpha_0$ and the second power scaling information may be $\alpha_1$.

In operation S540, the electronic device UE may calculate the effective PDP based on a ratio of the power scaling information. For example, the electronic device UE may calculate the effective PDP by summing the power between the synchronization signals transmitted in the non-SFN scheme according to Equation 2 below.

[Equation 2]

$$P_{SFN}[i] = \frac{\alpha_0}{\alpha_0 + \alpha_1} P_{TCI0}[i] + \frac{\alpha_1}{\alpha_0 + \alpha_1} P_{TCI1}[i]$$

Here, $P_{SFN}[i]$ indicates power of the *i* tap of the channel corresponding to the downlink signal transmitted in the SFN scheme, $P_{TCI0}[i]$ indicates power of the *i* tap of the channel corresponding to the first synchronization signal transmitted according to TCI0 in the serving base station TRP 1, and $P_{TCI1}[i]$ indicates power of the *i* tap of the channel corresponding to the second synchronization signal transmitted according to TCI1 in the neighboring base station TRP 2. That is, the PDP calculation circuit 331 may calculate the effective PDP by reflecting a coefficient (e.g.,

$$\frac{\alpha_0}{\alpha_0 + \alpha_1}$$

or

$$\frac{\alpha_1}{\alpha_0 + \alpha_1}$$

) to be proportional to a power scaling ratio of the synchronization signals when summing the power between the synchronization signals transmitted in the non-SFN scheme according to Equation 2. For example, when the first synchronization signal is transmitted at relatively high transmission power (e.g., when the first power scaling $\alpha_0$ is greater than the second power scaling $\alpha_1$), it may be seen that $P_{TCI0}[i]$ corresponding to the first synchronization signal is more reflected in the calculation of $P_{SFN}[i]$ which is the effective PDP. This is to increase accuracy in measuring a first arrival path (FAP) in a time domain by combining the synchronization signal of TRP in an environment where a power ratio of PDP is higher, and to improve channel estimation performance by giving greater weight to a signal transmitted at higher power. According to embodiments, the coefficient

$$\frac{\alpha_0}{\alpha_0 + \alpha_1}$$

may be referred to as a first ratio occupied by the first power scaling information among the first power scaling information and the second power scaling information. According to embodiments, the coefficient

$$\frac{\alpha_1}{\alpha_0 + \alpha_1}$$

may be referred to as the first ratio occupied by the second power scaling information among the first power scaling information and the second power scaling information.

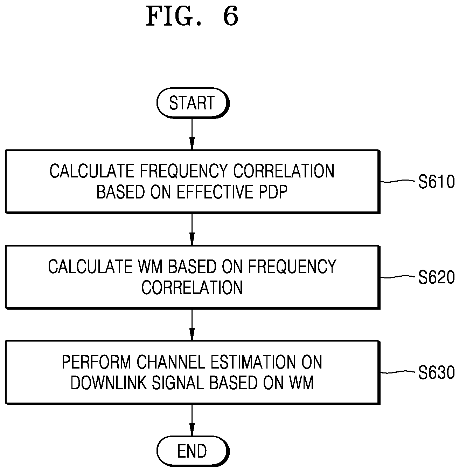

FIG. 6 is a flowchart illustrating an operating method of an electronic device according to embodiments. The electronic device of FIG. 6 may correspond to the electronic device UE of FIG. 1.

Referring to FIG. 6, in operation S610, the electronic device UE may calculate a frequency correlation based on an effective PDP. The frequency correlation may be calculated based on an equation below.

[Equation 3]

$$r(k) = \sum_{i=0}^{L-1} P_{SFN}[i] e^{-j2\pi ki/N}$$

Here, $r(k)$ indicates the frequency correlation between a $(n + k)$ subcarrier channel and a $n$ subcarrier channel, $P_{SFN}[i]$ indicates the power of a $(n + k)$ tap of a channel corresponding to a downlink signal transmitted in an SFN scheme, $L$ indicates the number of channel paths, and $N$ indicates a fast Fourier transformation (FFT) size. According to embodiments, each of $n$, k, $L$ and $N$ may be an integer.

In operation S620, the electronic device UE may calculate a WM based on the frequency correlation. The electronic device UE may calculate the WM according to the equation below.

[Equation 4]

$$R_{h,p}\left(R_{p,p} + \sigma^2 I\right)^{-1}$$

Here, $P$ indicates a channel of PDCCH (or PDSCH) demodulation reference signal (DMRS), $h$ indicates a channel of PDCCH (or PDSCH), $R_{h,p}$ indicates a cross-covariance matrix, and $R_{p,p}$ indicates an auto-covariance matrix. The electronic device UE may obtain the WM by calculating the cross-covariance matrix $R_{h,p}$ and the auto-covariance matrix $R_{p,p}$ based on the frequency correlation $r(k)$ obtained from the effective PDP.

In operation S630, the electronic device UE may perform channel estimation on a downlink signal based on the WM. The electronic device UE may perform LMMSE-based channel estimation based on the WM. That is, when the WM is simply generated based on any one PDP of a first PDP and a second PDP with strong signal strength according to the comparative example, the channel estimation performance deteriorates because the PDP does not substantially match a channel of a downlink signal transmitted in an SFN scheme, whereas when the WM is generated based on the effective PDP combined considering both the first PDP and the second PDP according to the inventive concepts, deterioration of the channel estimation performance may be prevented (or reduced) because the effective PDP substantially matches the channel of the downlink signal transmitted in the SFN scheme. According to embodiments, the electronic device UE may perform communication with the serving base station TRP 1 and/or the neighboring base station TRP 2 based on a result of the channel estimation on the downlink signal. For example, the electronic device UE may transmit a first signal to the serving base station TRP 1 and/or the neighboring base station TRP 2 using the communication circuit 310 by performing operations discussed in connection with the communication circuit 310 transmitting data. The first signal may contain an indication of the result of the channel estimation on the downlink signal. Additionally or alternatively, the electronic device UE may receive a second signal (e.g., the downlink signal) from the serving base station TRP 1 and/or the neighboring base station TRP 2 based on the result of the channel estimation on the downlink signal. For example, the electronic device UE may receive the second signal from the serving base station TRP 1 and/or the neighboring base station TRP 2 using the communication circuit 310 by performing operations discussed in connection with the communication circuit 310 receiving data to obtain a corresponding reception bit string. The electronic device UE may perform a further operation(s) based on the reception bit string including one or more of providing the reception bit string to a corresponding application executing on the electronic device UE for use in completing an application function, storing the reception bit string (e.g., in the memory 320), sending a third signal to the serving base station TRP 1 and/or the neighboring base station TRP 2 in response to the reception bit string, etc.

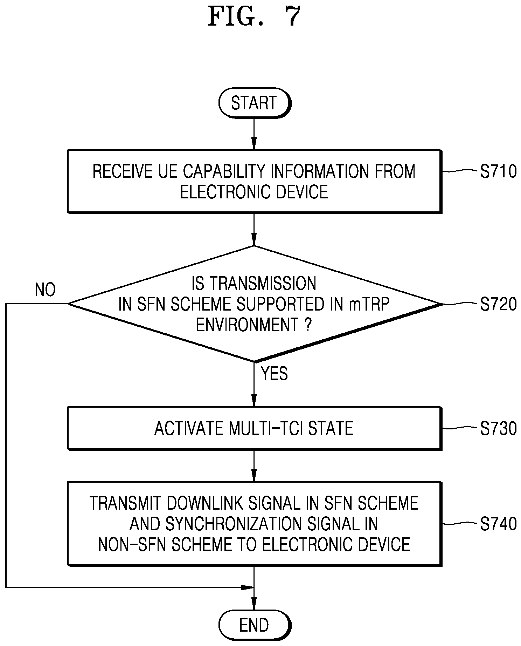

FIG. 7 is a flowchart illustrating an operating method of a base station according to embodiments. The base station of FIG. 7 may correspond to the serving base station TRP 1 or the neighboring base station TRP 2 of FIG. 1.

Referring to FIG. 7, in operation S710, the base station may receive UE capability information from the electronic device UE. The UE capability information may include information indicating whether the electronic device UE supports transmission in an SFN scheme.

In operation S720, the base station may identify whether transmission in the SFN scheme is supported in an mTRP environment. For example, the base station may determine whether the electronic device UE supports transmission in the SFN scheme based on "sfn-SimulTwoTCI-AcrossMultiCC-r17" in the UE capability information, and may determine whether the electronic device UE supports A in the SFN scheme or B in the SFM scheme based on "sfn-SchemeA-r17" and "sfn-SchemeB-r17". According to embodiments, when "sfn-SimulTwoTCI-AcrossMultiCC-r17" in the UE capability information is not "SUPPORTED", because the electronic device UE does not support transmission in the SFN scheme, the base station may end a procedure.

In operation S730, the base station may activate a multi-TCI state. For example, the base station may instruct the electronic device UE to activate the multi-TCI state through radio resource control (RRC) signaling.

In operation S740, the base station may transmit a downlink signal in the SFN scheme and a synchronization signal in a non-SFN scheme to the electronic device UE. For example, a serving base station (e.g., TRP 1 in FIG. 1) may transmit the downlink signal to the electronic device UE through TCI0, and a neighboring base station (e.g., TRP 2 in FIG. 1) may transmit the downlink signal to the electronic device UE through TCI0. That is, the downlink signal may be transmitted to the electronic device UE according to TCI0 based on the SFN scheme.

In another example, the serving base station (e.g., TRP 1 in FIG. 1) may transmit a first synchronization signal to the electronic device UE through TCI0, and the neighboring base station (e.g., TRP 2 in FIG. 1) may transmit a second synchronization signal to the electronic device UE through TCI1. That is, the first synchronization signal and the second synchronization signal may be transmitted to the electronic device UE in the non-SFN scheme.

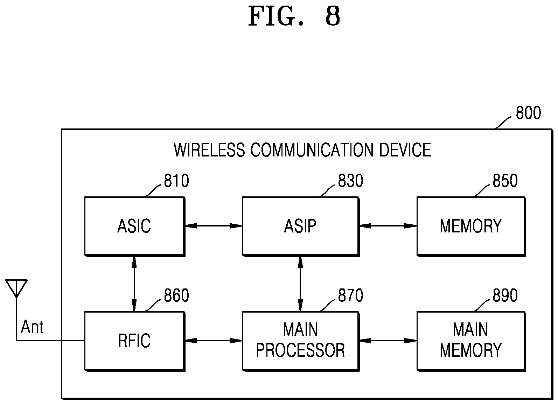

FIG. 8 is a block diagram of a wireless communication device 800 according to embodiments.

Referring to FIG. 8, the wireless communication device 800 may include a modem (not shown) and/or a radio frequency integrated circuit (RFIC) 860, and the modem may include an application specific integrated circuit (ASIC) 810, an application specific instruction set processor (ASIP) 830, a memory 850, a main processor 870, and/or a main memory 890. The wireless communication device 800 of FIG. 8 may be the electronic device UE of FIG. 1 or the electronic device 300 according to embodiments.

The RFIC 860 may be connected to an antenna Ant and may receive signals from or transmit signals to the outside (e.g., outside of the wireless communication device 800) by using a wireless communication network. The ASIP 830 is an integrated circuit customized for a specific purpose, and may support a dedicated instruction set for a specific application and execute instructions included in the instruction set. The memory 850 may communicate with the ASIP 830 and may store a plurality of instructions executed by the ASIP 830 as a non-transitory storage device. For example, the memory 850 may include, as a non-limiting example, any type of memory accessible by the ASIP 830, such as random access memory (RAM), read only memory (ROM), tape, a magnetic disk, an optical disk, volatile memory, non-volatile memory, and/or a combination thereof.

The main processor 870 may control the wireless communication device 800 by executing the plurality of instructions. For example, the main processor 870 may control the ASIC 810 and the ASIP 830, process data received through a wireless communication network, or process a user input with respect to the wireless communication device 800. The main memory 890 may communicate with the main processor 870 and, as a non-transitory storage device, may store the plurality of instructions executed by the main processor 870. For example, the main memory 890 may include, as a non-limiting example, any type of memory accessible by the main processor 870, such as RAM, ROM, tape, a magnetic disk, an optical disk, volatile memory, non-volatile memory, and/or a combination thereof.

Conventional devices and methods are unable to estimate a downlink channel in a multi-transmission/reception point (mTRP) environment using synchronization signals transmitted according to a single frequency network (SFN) scheme with sufficient accuracy. For example, according to the SFN scheme, different base stations transmit a common downlink signal over the same channel (or similar channels). The characteristics of this common channel would be based on respective characteristics of different respective channels used by the different base stations. However, the conventional devices and methods are unable to characterize these respective channels using synchronization signals in the common downlink signal. Accordingly, channel estimation performance of the conventional devices and methods deteriorates.

However, according to embodiments, improved devices and methods are provided for estimating a downlink channel in a multi-transmission/reception point (mTRP) environment. For example, according to embodiments, different synchronization signals may be transmitted by different base stations using a non-SFN scheme (e.g., different synchronization signals over different channels). Accordingly, the transmitted synchronization signals may be used to characterize the respective channels of the different base stations. Also, power delay profiles (PDP) for the respective channels may be combined to generate a weight matrix for use in estimating the common channel used by the base stations to transmit the downlink signal. Accordingly, the improved devices and methods overcome the deficiencies of the conventional devices and methods to at least improve channel estimation performance (e.g., accuracy).

According to one embodiment, when a reference signal for synchronization is transmitted in the non-SFN scheme in the transmission of NR HST-SFN PDCCH/PDSCH, PDPs of synchronization reference signals transmitted from TRPs may be combined to approximate a channel in a SFN scheme, and a weight matrix for PDCCH/PDSCH channel estimation may be generated by using the corresponding value. In another embodiment, a base station may inform a power scaling coefficient of the synchronization signal of each TRP, and a terminal may use power scaling information to combine PDPs for SFN channel estimation.

According to embodiments, operations described herein as being performed by the wireless communication system 100, the serving base station TRP 1, the neighboring base station TRP 2, the electronic device UE, the base station 200, the wireless communication circuit 210, the backhaul communication circuit 220, the control circuit 240, the electronic device 300, the communication circuit 310, the control circuit 330, the PDP calculation circuit 331, the WM calculation circuit 333, the wireless communication device 800, the RFIC 860, the ASIC 810, the ASIP 830 and/or the main processor 870 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a graphics processing unit (GPU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm, and/or functions, described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 230, the memory 320, the memory 850 and/or the main memory 890). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail herein. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, contemporaneously, or in some cases be performed in reverse order.

Although terms of "first" or "second" may be used to explain various components, the components are not limited to the terms. These terms should be used only to distinguish one component from another component. For example, a "first" component may be referred to as a "second" component, or similarly, and the "second" component may be referred to as the "first" component. Expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples. As used herein the term "and/or" includes any and all combinations of one or more of the associated listed items.

Any of the arrows or lines that interconnect the components in the illustrated drawings may represent physical data paths, logical data paths, or both. A physical data path may comprise a data bus or a transmission line, for example. A logical data path may represent a communication or data message between software programs, software modules, Subroutines, or other software constituents or components.

Embodiments are set out in the following clauses:

Clause 1. An electronic device in a high speed train-single frequency network (HST-SFN) scenario, the electronic device comprising: processing circuitry configured to receive a first downlink signal from a serving base station and a second downlink signal from a neighboring base station, the second downlink signal being the same as the first downlink signal, and the first downlink signal and the second downlink signal being transmitted in an SFN scheme, receive a first synchronization signal from the serving base station and a second synchronization signal from the neighboring base station, the second synchronization signal being different from the first synchronization signal, and the first synchronization signal and the second synchronization signal being transmitted in a non-SFN scheme, obtain a first power delay profile (PDP) based on the first synchronization signal, obtain a second PDP based on the second synchronization signal, calculate an effective PDP based on the first PDP and the second PDP, and generate a weight matrix (WM) based on the effective PDP.

Clause 2. The electronic device of clause 1, wherein the processing circuitry is configured to calculate the effective PDP by summing the first PDP and the second PDP.

Clause 3. The electronic device of clause 1 or 2, wherein the processing circuitry is configured to generate the WM by: calculating a frequency correlation based on the effective PDP; and calculating an auto-covariance matrix and a cross-covariance matrix based on the frequency correlation.

Clause 4. The electronic device of any preceding clause, wherein a channel through which the first synchronization signal is transmitted is different from a channel through which the second synchronization signal is transmitted.

Clause 5. The electronic device of any preceding clause, wherein a channel through which the first downlink signal is transmitted is same as a channel through which the second downlink signal is transmitted.

Clause 6. The electronic device of any preceding clause, wherein the first PDP corresponds to a channel through which the first synchronization signal is transmitted; the second PDP corresponds to a channel through which the second synchronization signal is transmitted; and the effective PDP corresponds to a channel through which the first downlink signal is transmitted.

Clause 7. The electronic device of any preceding clause, wherein the processing circuitry is configured to perform channel estimation on a downlink channel based on the WM, the downlink channel corresponding to the first downlink signal and the second downlink signal.

Clause 8. An electronic device in a high speed train-single frequency network (HST-SFN) scenario, the electronic device comprising: processing circuitry configured to receive a first downlink signal from a serving base station and a second downlink signal from a neighboring base station, the second downlink signal being the same as the first downlink signal, and the first downlink signal and the second downlink signal being transmitted in an SFN scheme, receive a first synchronization signal from the serving base station and a second synchronization signal from the neighboring base station, the second synchronization signal being different from the first synchronization signal, the first synchronization signal and the second synchronization signal being transmitted in a non-SFN scheme, the first synchronization signal including first power scaling information indicating a transmission power of the serving base station, and the second synchronization signal including second power scaling information indicating a transmission power of the neighboring base station, obtain a first power delay profile (PDP) based on the first synchronization signal, obtain a second PDP based on the second synchronization signal, calculate an effective PDP based on the first power scaling information, the first PDP, the second power scaling information, and the second PDP, and generate a weight matrix (WM) based on the effective PDP.

Clause 9. The electronic device of clause 8, wherein processing circuitry is configured to calculate the effective PDP by summing a first value and a second value, the first value being obtained by multiplying the first PDP by a first ratio occupied by the first power scaling information among the first power scaling information and the second power scaling information, and the second value being obtained by multiplying the second PDP by the first ratio occupied by the second power scaling information among the first power scaling information and the second power scaling information.

Clause 10. The electronic device of clause 8 or 9, wherein the processing circuitry is configured to generate the WM by: calculating a frequency correlation based on the effective PDP; and calculating an auto-covariance matrix and a cross-covariance matrix based on the frequency correlation.

Clause 11. The electronic device of clause 8, 9, or 10, wherein a channel through which the first synchronization signal is transmitted is different from a channel through which the second synchronization signal is transmitted.

Clause 12. The electronic device of any one of clauses 8 to 11, wherein a channel through which the first downlink signal is transmitted is same as a channel through which the second downlink signal is transmitted.

Clause 13. The electronic device of any one of clauses 8 to 12, wherein the first PDP corresponds to a channel through which the first synchronization signal is transmitted; and the second PDP corresponds to a channel through which the second synchronization signal is transmitted.

Clause 14. The electronic device of any one of clause 8 to 13, wherein the effective PDP corresponds to a channel through which the first downlink signal is transmitted.

Clause 15. The electronic device of any one of clauses 8 to 14, wherein the processing circuitry is configured to perform channel estimation on a downlink channel based on the WM, the downlink channel corresponding to the first downlink signal and the second downlink signal.

While the inventive concepts have been particularly shown and described with reference to embodiments thereof, it will be understood that various changes in form and details may be made therein without departing from the scope of the following claims.

**Claims**

1. An electronic device in a high speed train-single frequency network (HST-SFN) scenario, the electronic device comprising:

   processing circuitry configured to

   receive a first downlink signal from a serving base station and a second downlink signal from a neighboring base station, the second downlink signal being the same as the first downlink signal, and the first downlink signal and the second downlink signal being transmitted in an SFN scheme,

   receive a first synchronization signal from the serving base station and a second synchronization signal from the neighboring base station, the second synchronization signal being different from the first synchronization signal, and the first synchronization signal and the second synchronization signal being transmitted in a non-SFN scheme,

   obtain a first power delay profile (PDP) based on the first synchronization signal, obtain a second PDP based on the second synchronization signal,

   calculate an effective PDP based on the first PDP and the second PDP, and generate a weight matrix (WM) based on the effective PDP.

2. The electronic device of claim 1, wherein the processing circuitry is configured to calculate the effective PDP by summing the first PDP and the second PDP.

3. The electronic device of claim 1 or 2, wherein the processing circuitry is configured to generate the WM by:

   calculating a frequency correlation based on the effective PDP; and

   calculating an auto-covariance matrix and a cross-covariance matrix based on the frequency correlation.

4. The electronic device of any preceding claim, wherein a channel through which the first synchronization signal is transmitted is different from a channel through which the second synchronization signal is transmitted.

5. The electronic device of any preceding claim, wherein a channel through which the first downlink signal is transmitted is same as a channel through which the second downlink signal is transmitted.

6. The electronic device of any preceding claim, wherein

   the first PDP corresponds to a channel through which the first synchronization signal is transmitted;

   the second PDP corresponds to a channel through which the second synchronization signal is transmitted; and

   the effective PDP corresponds to a channel through which the first downlink signal is transmitted.

7. The electronic device of any preceding claim, wherein the processing circuitry is configured to perform channel estimation on a downlink channel based on the WM, the downlink channel corresponding to the first downlink signal and the second downlink signal.

8. The electronic device of claim 1, wherein:

   the first synchronization signal includes first power scaling information indicating a transmission power of the serving base station, and the second synchronization signal includes second power scaling information indicating a transmission power of the neighboring base station,

   wherein the processing circuitry is further configured to:

   calculate an effective PDP based on the first power scaling information, the first PDP, the second power scaling information, and the second PDP.

9. The electronic device of claim 8, wherein processing circuitry is configured to calculate the effective PDP by summing a first value and a second value, the first value being obtained by multiplying the first PDP by a first ratio occupied by the first power scaling information among the first power scaling information and the second power scaling information, and the second value being obtained by multiplying the second PDP by the first ratio occupied by the second power scaling information among the first power scaling information and the second power scaling information.

10. The electronic device of claim 8 or 9, wherein the processing circuitry is configured to generate the WM by:

calculating a frequency correlation based on the effective PDP; and
calculating an auto-covariance matrix and a cross-covariance matrix based on the frequency correlation.

11. The electronic device of claim 8, 9 or 10, wherein a channel through which the first synchronization signal is transmitted is different from a channel through which the second synchronization signal is transmitted.

12. The electronic device of any one of claims 8 to 11, wherein a channel through which the first downlink signal is transmitted is same as a channel through which the second downlink signal is transmitted.

13. The electronic device of any one of claims 8 to 12, wherein

the first PDP corresponds to a channel through which the first synchronization signal is transmitted; and
the second PDP corresponds to a channel through which the second synchronization signal is transmitted.

14. The electronic device of any one of claims 8 to 13, wherein
the effective PDP corresponds to a channel through which the first downlink signal is transmitted.

15. The electronic device of any one of claims 8 to 14, wherein the processing circuitry is configured to perform channel estimation on a downlink channel based on the WM, the downlink channel corresponding to the first downlink signal and the second downlink signal.

# FIG. 1

# FIG. 2

200

| 220 | 240 | 210 |
|-----|-----|-----|
| BACKHAUL COMMUNICATION CIRCUIT | CONTROL CIRCUIT | WIRELESS COMMUNICATION CIRCUIT |

230

MEMORY

# FIG. 3

300

| 320 | 330 CONTROL CIRCUIT | 310 |
|-----|-----|-----|
| MEMORY | 331 PDP CALCULATION CIRCUIT — 333 WM CALCULATION CIRCUIT | COMMUNICATION CIRCUIT |

# FIG. 4

```
                    ( START )
                        |
                        v
    +-----------------------------------------+
    |   TRANSMIT UE CAPABILITY INFORMATION TO  |---- S410
    |            BASE STATION                   |
    +-----------------------------------------+
                        |
                        v
    +-----------------------------------------+
    |   RECEIVE FIRST SYNCHRONIZATION SIGNAL AND|---- S420
    |      SECOND SYNCHRONIZATION SIGNAL        |
    +-----------------------------------------+
                        |
                        v
    +-----------------------------------------+
    |   OBTAIN FIRST PDP CORRESPONDING TO FIRST |
    |  SYNCHRONIZATION SIGNAL AND SECOND PDP    |---- S430
    |  CORRESPONDING TO SECOND SYNCHRONIZATION  |
    |              SIGNAL                        |
    +-----------------------------------------+
                        |
                        v
    +-----------------------------------------+
    |   CALCULATE EFFECTIVE PDP BASED ON FIRST PDP|---- S440
    |            AND SECOND PDP                  |
    +-----------------------------------------+
                        |
                        v
    +-----------------------------------------+
    |   GENERATE WM BASED ON EFFECTIVE PDP      |---- S450
    +-----------------------------------------+
                        |
                        v
                    (  END  )
```

# FIG. 5

S430

IS POWER SCALING INFORMATION INCLUDED IN SYNCHRONIZATION SIGNAL ? — S510

NO

YES

IDENTIFY FIRST POWER SCALING INFORMATION CORRESPONDING TO FIRST SYNCHRONIZATION SIGNAL AND SECOND POWER SCALING INFORMATION CORRESPONDING TO SECOND SYNCHRONIZATION SIGNAL — S530

S520 — CALCULATE EFFECTIVE PDP ACCORDING TO COMBINING

CALCULATE EFFECTIVE PDP BASED ON RATIO OF POWER SCALING INFORMATION — S540

S450

# FIG. 6

START

CALCULATE FREQUENCY CORRELATION
BASED ON EFFECTIVE PDP — S610

CALCULATE WM BASED ON FREQUENCY
CORRELATION — S620

PERFORM CHANNEL ESTIMATION ON
DOWNLINK SIGNAL BASED ON WM — S630

END

# FIG. 7

```
         ( START )
             |
             v
┌─────────────────────────────┐
│ RECEIVE UE CAPABILITY        │
│ INFORMATION FROM             │──── S710
│ ELECTRONIC DEVICE            │
└─────────────────────────────┘
             |
             v
         ╱────────────╲
  NO    ╱  IS TRANSMISSION ╲
 ◄─────╱ IN SFN SCHEME SUPPORTED IN mTRP ╲──── S720
       ╲    ENVIRONMENT ?   ╱
        ╲─────────────────╱
             | YES
             v
┌─────────────────────────────┐
│   ACTIVATE MULTI-TCI STATE   │──── S730
└─────────────────────────────┘
             |
             v
┌─────────────────────────────┐
│ TRANSMIT DOWNLINK SIGNAL IN  │
│ SFN SCHEME AND               │──── S740
│ SYNCHRONIZATION SIGNAL IN    │
│ NON-SFN SCHEME TO ELECTRONIC │
│ DEVICE                       │
└─────────────────────────────┘
             |
             v
          ( END )
```

FIG. 8

WIRELESS COMMUNICATION DEVICE — 800

| ASIC 810 | ASIP 830 | MEMORY 850 |

Ant

| RFIC 860 | MAIN PROCESSOR 870 | MAIN MEMORY 890 |

Europäisches
Patentamt

European
Patent Office

Office européen
des brevets

## EUROPEAN SEARCH REPORT

Application Number

EP 24 22 0327

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/374079 A1 (CHERVYAKOV ANDREY [RU] ET AL) 26 November 2020 (2020-11-26) | 1-7 | INV. H04L25/02 |
| A | * paragraph [0052] - paragraph [0186]; figure 10 * | 8-15 | H04L27/26 H04B17/364 |
| | ----- | | |
| Y | US 2014/135025 A1 (YOO TAESANG [US] ET AL) 15 May 2014 (2014-05-15) | 1-7 | |
| A | * paragraph [0084] - paragraph [0116]; figures 5-10 * | 8-15 | |
| | ----- | | |
| A | US 2022/078049 A1 (YUAN BOFENG [US] ET AL) 10 March 2022 (2022-03-10) * the whole document * | 1-15 | |
| | ----- | | |

TECHNICAL FIELDS
SEARCHED (IPC)

H04L
H04B

The present search report has been drawn up for all claims

| Place of search | Date of completion of the search | Examiner |
|---|---|---|
| The Hague | 30 April 2025 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 0327

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | Publication date | Patent family member(s) | Publication date |
|---|---|---|---|
| US 2020374079 A1 | 26-11-2020 | NONE | |
| US 2014135025 A1 | 15-05-2014 | BR 112012009276 A2 | 31-05-2016 |
| | | CN 102577144 A | 11-07-2012 |
| | | CN 103825626 A | 28-05-2014 |
| | | EP 2491659 A1 | 29-08-2012 |
| | | EP 2597780 A1 | 29-05-2013 |
| | | EP 2667517 A1 | 27-11-2013 |
| | | EP 2755331 A1 | 16-07-2014 |
| | | JP 5705865 B2 | 22-04-2015 |
| | | JP 5706011 B2 | 22-04-2015 |
| | | JP 5976864 B2 | 24-08-2016 |
| | | JP 2013509099 A | 07-03-2013 |
| | | JP 2014123961 A | 03-07-2014 |
| | | JP 2015146579 A | 13-08-2015 |
| | | KR 20120119216 A | 30-10-2012 |
| | | TW 201138329 A | 01-11-2011 |
| | | TW 201404054 A | 16-01-2014 |
| | | US 2011092231 A1 | 21-04-2011 |
| | | US 2013308466 A1 | 21-11-2013 |
| | | US 2014135025 A1 | 15-05-2014 |
| | | WO 2011050182 A1 | 28-04-2011 |
| US 2022078049 A1 | 10-03-2022 | CN 112398763 A | 23-02-2021 |
| | | US 2022078049 A1 | 10-03-2022 |

EPO FORM P0459

For more details about this annex : see Official Journal of the European Patent Office, No. 12/82